# EUROPEAN PATENT APPLICATION

(11) **EP 4 664 976 A1**
(43) Date of publication of application: **17.12.2025**
(21) Application number: 23921229.3
(22) Date of filing: 10.02.2023
(51) Int. Cl.: H04W 24/10, H04W 64/00

(54) **TERMINAL AND REPORTING METHOD**

(71) Applicant: NTT DOCOMO, INC., Tokyo 100-6150 (JP)
(72) Inventor: SHIMA, Kousuke, Tokyo 100-6150 (JP); TAKEDA, Daiki, Tokyo 100-6150 (JP); OKAMURA, Masaya, Tokyo 100-6150 (JP); HARADA, Hiroki, Tokyo 100-6150 (JP); KURITA, Daisuke, Tokyo 100-6150 (JP); OKANO, Mayuko, Tokyo 100-6150 (JP)
(74) Representative: Hoffmann Eitle
(86) International application number: PCT/JP2023/004667
(87) International publication number: WO 2024/166401

(57) **Abstract**

A terminal includes: a control unit configured to measure a plurality of indicator values each indicating a line-of-sight state; and a transmission unit configured, on the basis of a size of a difference among the plurality of indicator values measured by the control unit and an allowable error, to select one or more of the plurality of indicator values and to report the selected one or more indicator values to a network.

## Description

### Technical Field

The present invention relates to a terminal and a reporting method in a radio communication system.

### Background Art

In 3GPP (registered trademark) (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been developed. In 5G, various radio technologies have been studied in order to satisfy the requirement that the delay in the radio section be less than or equal to 1 ms while achieving a throughput greater than or equal to 10 Gps.

In addition, NR positioning for performing positioning using a reference signal or the like has been studied. In NR Positioning, it is possible to use LOS-NLOS-Indicator indicating a line-of-sight state (Non-Patent Document 1).

### Citation List

### Non-Patent Literature

[Non-Patent Literature 1] 3GPP TS 37.355 V17.3.0 (2022-12)

### Summary of the Invention

### Solution to Problem

The use of sub-THz is being studied for 6G. In view of the above, it is conceivable that the terminal measures LOS-NLOS-Indicator using a plurality of frequencies. Therefore, it is assumed that the terminal reports many indicators to the network, and there is a problem that the payload size may increase.

The present invention has been made in view of the above circumstances, and an object of the present invention is to provide a technique for suppressing a payload size when reporting an indicator value from a terminal to a network. Means for Solving the Problem

According to the disclosed technique, there is provided a terminal including:
a control unit configured to measure a plurality of indicator values each indicating a line-of-sight state; and
a transmission unit configured, on the basis of a size of a difference among the plurality of indicator values measured by the control unit and an allowable error, to select one or more of the plurality of indicator values and to report the selected one or more indicator values to a network.

### Advantageous Effects of Invention

According to the disclosed technique, a technique for suppressing a payload size when an indicator value is reported from a terminal to a network is provided.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram for explaining Embodiment 0;
[Fig. 4] FIG. 4 is a diagram for explaining Embodiment 0;
[Fig. 5] FIG. 5 is a diagram for explaining Embodiment 0;
[Fig. 6] FIG. 6 is a diagram for explaining Embodiment 1;
[Fig. 7] FIG. 7 is a diagram for explaining Embodiment 3;
[Fig. 8] FIG. 8 is a diagram for explaining Embodiment 5;
[Fig. 9] FIG. 9 is a diagram for explaining Embodiment 5;
[Fig. 10] FIG. 10 is a diagram showing an example of a functional configuration of the base station 10 and an LMF 30 according to an embodiment of the present invention;
[Fig. 11] FIG. 11 is a diagram showing an example of a functional configuration of a terminal 20 according to an embodiment of the present invention;
[Fig. 12] FIG. 12 is a diagram showing an example of a hardware configuration of the base station 10, the terminal 20, or the LMF 30 according to an embodiment of the present invention;
[Fig. 13] FIG. 13 is a diagram showing an example of a vehicle.

### Description of Embodiments

Hereinafter, embodiments of the present invention will be described with reference to the drawings. The embodiment described below is an example, and the embodiment to which the present invention is applied is not limited to the following embodiment.

### (System Configuration)

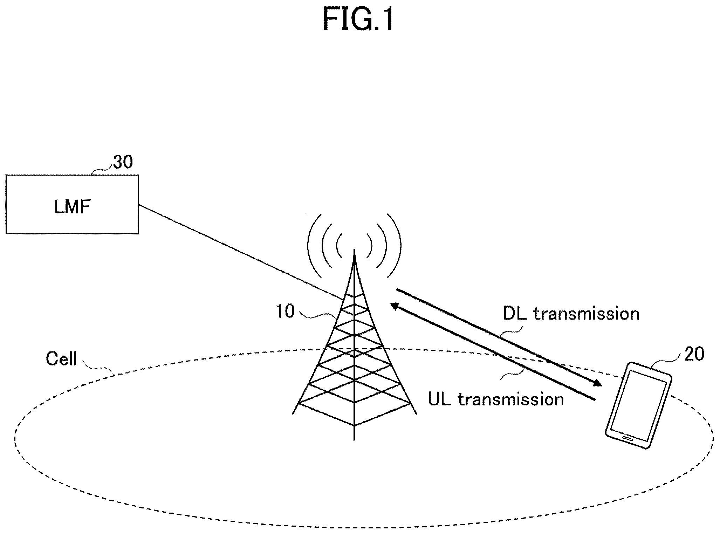

FIG. 1 is a diagram for explaining a radio communication system according to an embodiment of the present invention. As shown in FIG. 1, the radio communication system according to the embodiment of the present invention includes a base station 10 and a terminal 20. The core network is provided with an LMF 30, and the LMF 30 is capable of communicating with the base stations 10. Note that the LMF 30 may communicate with the base station 10 via an AMF. The LMF 30 is an example of a network apparatus. The base station 10 is also an example of a network apparatus.

Although Fig. 1 shows only one base station 10 and one terminal 20, this is merely illustrative; there may be multiple base stations and/or terminals. For example, several base stations 10 that transmit a DL-PRS (positioning reference signal) to be received by the terminal 20 may be provided. One, some, or all of these base stations 10 may be airborne devices, e.g., satellites or high-altitude platform stations (HAPS).

The transmission source of a DL-PRS may be referred to as a transmission reception point (TRP). The TRP may be referred to as a transmission point or a reception point. The TRP may be a base station, or may be an extended antenna device of a base station (example: O-RU), or may be a device other than these. The extended antenna device may be referred to as a base station.

The base station 10 is a communication apparatus that provides one or more cells and performs radio communication with the terminal 20. The physical resources of the radio signal are defined in the time domain and the frequency domain, the time domain may be defined by the number of OFDM symbols, and the frequency domain may be defined by the number of subcarriers or the number of resource blocks. In addition, a transmission time interval (TTI) in the time domain may be a slot, or a TTI may be a subframe. Note that the cell and the CC may be considered to be synonymous.

The base station 10 can perform carrier aggregation in which a plurality of cells (a plurality of CCs (component carriers)) are bundled to communicate with the terminal 20. In the carrier aggregation, one PCell (primary cell) and one or more SCells (secondary cells) are used.

The base station 10 transmits a synchronization signal, system information, and the like to the terminal 20. The synchronization signal is, for example, an NR-PSS and an NR-SSS. The system information is transmitted, for example, in the NR-PBCH or the PDSCH, and is also referred to as broadcast information. As illustrated in FIG. 1, the base station 10 transmits a control signal or data to the terminal 20 on a downlink (DL), and receives a control signal or data from the terminal 20 on an uplink (UL). Note that, although what is transmitted on a control channel such as a PUCCH or a PDCCH is referred to as a control signal and what is transmitted on a shared channel such as a PUSCH or a PDSCH is referred to as data, such a name is an example. Also, UCI (Uplink Control Information) is transmitted by the PUCCH or the PUSCH.

The terminal 20 is a communication apparatus having a radio communication function, such as a smartphone, a mobile phone, a tablet, a wearable terminal, and a communication module for M2M (Machine-to-Machine). As illustrated in FIG. 1, the terminal 20 receives a control signal or data from the base station 10 in the DL and transmits a control signal or data to the base station 10 in the UL, thereby using various communication services provided by the radio communication system. Note that the terminal 20 may be referred to as a UE, and the base station 10 may be referred to as a gNB.

The terminal 20 can perform carrier aggregation in which a plurality of cells (a plurality of component carriers (CCs)) are bundled to communicate with the base station 10. In the carrier aggregation, one PCell (primary cell) and one or more SCells (secondary cells) are used. Also, a PUCCH-SCell with PUCCH may be used.

The LMF 30 is a function (apparatus) that performs communication control related to a location information service defined in 5GC. The LMF 30 may be referred to as a location management server, a location management apparatus, or a network apparatus. The LMF 30 can receive measured results (phases, received powers, time differences, angles, etc.) of the reference signals from the terminal 20 or the base station 10, and calculate the position of the terminal 20. The LMF 30 may provide configuration information or control information related to positioning to the terminal 20 and the base station 10.

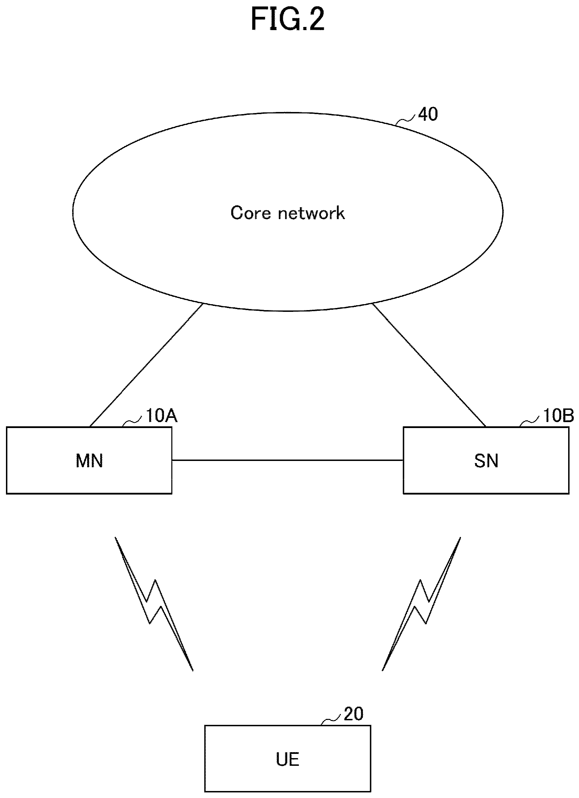

FIG. 2 illustrates a configuration example of a radio communication system in a case where dual connectivity (DC) is executed. As shown in FIG. 2, the base transceiver station 10A that serves as a master node (MN) and the base transceiver station 10B that serves as a secondary node (SN) are provided. The base stations 10A and 10B are connected to the core networks 40, respectively. The terminal 20 may communicate with both the base station 10A and the base station 10B.

A cell group provided by a base station 10A that is an MN is referred to as a master cell group (MCG), and a cell group provided by a base station 10B that is an SN is referred to as a secondary cell group (SCG). In DC, the MCG includes one PCell and one or more SCells, and the SCG includes one PSCell (Primary SCell) and one or more SCells.

The processing operation in the present embodiment may be executed by the system configuration shown in FIG. 1, the system configuration shown in FIG. 2, or a system configuration other than these. In the following description, "/" means "or" unless otherwise specified or unless it is clear from the context that the meaning is different.

### (About the Problem)

As described above, the use of sub-THz is being studied for 6G. For example, in a situation where positioning is possible using a plurality of frequencies such as sub-THz and existing frequencies, it is conceivable to measure the LOS-NLOS-Indicator using a plurality of frequencies.

The LOS-NLOS-Indicator is a function introduced in Rel-17. By associating LOS-NLOS-Indicator on a PRS resource basis/TRP basis and providing notification of the LOS-NLOS-Indicator from the terminal 20 to the base station 10/LMF 30, for example, the LOS-NLOS-Indicator can be used as positioning assistance information in the base station 10/LMF 30. Note that the base station 10/LMF 30 may be referred to as a network (NW).

Here, the LOS-NLOS-Indicator will be described. The LOS-NLOS-Indicator is an indicator value indicating a state of line-of-sight (likelihood of a line-of-sight) of a propagation path of the PRS from a transmission source (for example, a TRP) to a receiver (for example, the terminal 20), for example. Note that, in the following description, the LOS-NLOS-Indicator is an information element and indicates its value, but the value of the LOS-NLOS-Indicator may be expressed as an LOS-NLOS-Indicator value. The LOS-NLOS-Indicator may be referred to as an "indicator value indicating a likelihood of a line-of-sight".

In the present embodiment, the LOS-NLOS-Indicator has a soft value and a hard value. The soft value indicates a likelihood of a line-of-sight of a propagation path with a numerical value (probability estimate) between 0 and 1, with a resolution of 0.1. 0 indicates NLOS (Non-Line-of-Sight), and 1 indicates LOS (Line-of-Sight).

The hard value indicates whether the likelihood of the line-of-sight of a propagation path from a transmission source (for example, a TRP) to a receiver (for example, the terminal 20) is LOS (true) or NLOS (false).

In the present embodiment, the terminal 20 can perform LOS/NLOS determination using, for example, a sub-THz signal and an existing frequency signal transmitted from the base station 10. Any method may be used as the LOS/NLOS determination method, and examples thereof include a method of performing the LOS/NLOS determination from measurement of arrival time of a signal. Hereinafter, for convenience of description, the LOS-NLOS-Indicator may be referred to as an indicator.

By measuring the indicator at a plurality of frequencies as described above, it is assumed that the terminal 20 reports a large number of indicators to the base station 10/LMF 30. This may increase payload size.

In particular, when the number of resources is large, such as in Sub-THz, or when the indicator is assumed to be used for each of a plurality of frequencies, the influence of the increase in the payload size is large.

Further, even in a case of a plurality of resources in a QCL relationship (= assumed to be the same beam at different frequencies), the indicator values are unlikely to completely match. Therefore, many indicators need to be reported, but it is necessary to narrow down the indicators in order to suppress the payload size.

Hereinafter, a technology for reducing the payload size related to the indicator report will be described.

### (Overview of Embodiment)

Hereinafter, as embodiments for solving the above problem, Embodiment 0 to Embodiment 5 will be described. The outline of Embodiments 0 to 5 is as follows. The Embodiments 0 to 5 can be implemented in any combination.

Embodiment 0 (High Level Proposal): A number of indicators to be reported is narrowed down by the terminal 20. The terminal 20 may report a number of indicators different from a number of indicators measured in each of the plurality of frequency bands.

Embodiment 1: The terminal 20 determines an indicator to be reported based on quality related to the indicator.

Embodiment 2: Priorities are set among indicators, and the terminal 20 determines an indicator to be reported according to the priorities.

Embodiment 3: A timer that assumes reception of a reference signal necessary for indicator calculation is provided in the terminal 20, and the terminal 20 determines an indicator to be reported accordingly.

Embodiment 4: An allowable error between indicators is provided, and the terminal 20 determines an indicator to be reported accordingly.

Embodiment 5: The terminal 20 determines an indicator to be reported by using the conditions of Embodiments 1 to 4 in a combined manner.

Note that, in the embodiments 0 to 5, the subject that reports the indicator is the terminals 20, but the subject that reports the indicator may be the base stations 10, the LMF30, or a network node apparatus other than the base stations 10 / the LMF30.

Hereinafter, each embodiment will be described in detail. Hereinafter, Embodiment 0 is a basic example, and detailed examples thereof correspond to Embodiments 1 to 5. Any or all of the Embodiments 0 to 5 can be combined and implemented. However, each of the Embodiments 1 to 4 may be implemented without assuming the Embodiment 0.

### (Embodiment 0)

First, the Embodiment 0 will be described. In the Embodiment 0, the number of indicators to be reported by the terminal 20 is narrowed down. The terminal 20 may report a number of indicators different from a number of indicators measured in each of a plurality of frequency bands. Note that the use of the "frequency band" as a unit of measurement is an example. The frequency in the "frequency band" may be used as a unit of measurement. The "frequency" may have a certain bandwidth. Further, the "frequency" may be understood in a broad sense, and the "frequency" may include a "frequency band".

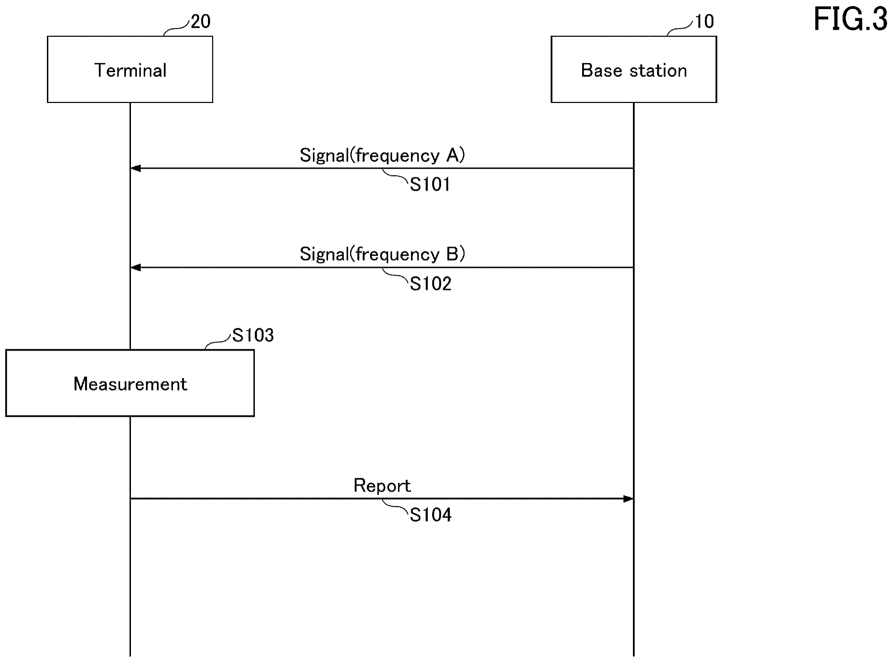

An operation example in the Embodiment 0 will be described with reference to FIG. 3. In S101, the terminal 20 receives a signal transmitted from the base station 10 by a frequency A. In S102, the terminal 20 receives a signal transmitted from the base station 10 by a frequency B. These signals are, for example, PRSs, but are not limited to PRSs.

In S103, the terminal 20 measures (calculates) the indicator for both the signal at the frequency A and the signal at the frequency B. For example, the terminal 20 performs measurements on each of three PRS resources at the frequency A to obtain three indicators, performs measurements on each of the three PRS resources at the frequency B to obtain another three indicators, and thus obtains a total of six indicators.

In S104, the terminal 20 selects, for example, six or fewer (for example, three) indicators from among six indicators, and reports the selected indicators to the base stations 10/LMF 30.

That is, in the Embodiment 0, when the terminal 20 measures NA, NB, NC,... indicators at a plurality of frequencies A, B, C,..., respectively, the terminal 20 reports NA + NB + NC +... or fewer indicators. That is, it is assumed that the terminal 20 does not necessarily report all of the measured indicators.

The plurality of frequencies A, B, C,... may be any frequencies, and the plurality of frequencies may include, for example, any one or any plurality of FR1, FR2, FR3, sub-THz, THz, and the like.

The terminal 20 can report indicators with any of the following granularities for the granularity of the frequency, for example.
- Per UE (terminal unit: all frequencies used by terminal)
- Per FR (FR unit)
- Per band (band unit)
- Per CC=per positioning frequency layer (PFL) (PFL unit)
- Per band combination (band combination unit)

The terminal 20 can report the indicator at each of the above granularities, for example, at the following granularity of resources.
- Per TRP (TRP unit)
- Per PRS resource (PRS resource unit)

In the Embodiment 0, the terminal 20 may report capability (capability information) of the number of indicators that can be reported to the NW (example: the base station 10/LMF 30). As the granularity of reporting the number of indicators as capability, for example, any of the following granularities can be used.
- Per UE
- Per FR
- Per band
- Per CC=per PFL
- Per band combination

After reporting the indicator, the terminal 20 may assume that a frequency at which positioning is performed based on the indicator is indicated from the NW. Such positioning may be referred to as two stage positioning.

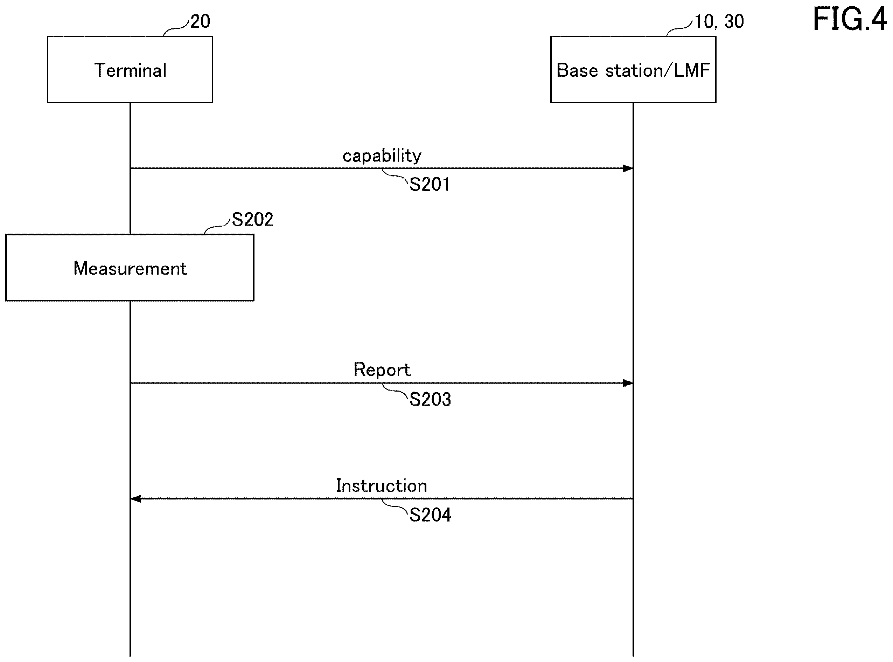

An operation example including capability reporting will be described with reference to FIG. 4. In S201, for example, the terminal 20 (assuming Per UE) reports, to the base station 10/LMF 30, capability indicating that the number of indicators that can be reported by the terminal 20 is N.

In S202, the terminal 20 measures indicators. Here, it is assumed that M indicators are obtained. In S203, the terminal 20 reports N or fewer and M or fewer indicators to the base station 10/LMF 30. In S204, the terminal 20 receives, from the base station 10/LMF 30, for example, an instruction of a frequency at which the terminal 20 should perform positioning.

The terminal 20 may receive an instruction (or configuration) of report content from the base station 10/LMF 30. The "report content" is, for example, any one or any two or more of the number of indicators to be reported, the granularity of the report, and the indicator to be reported (the indicator for which TRP, the indicator for which PRS resource, and the like).

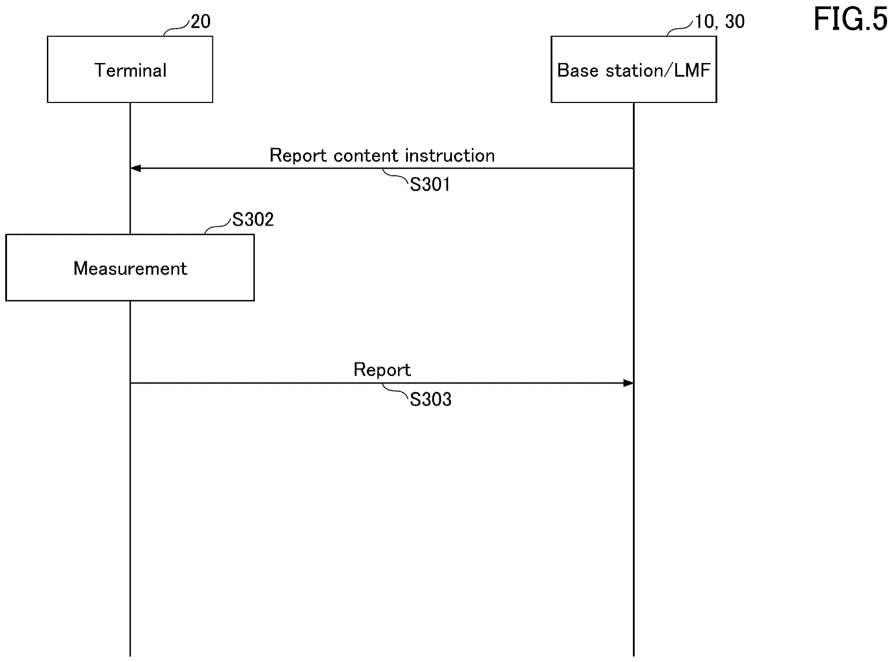

An example of the operation in this case is shown in FIG. 5. In S301, the terminal 20 receives an instruction of the report content (e.g., up to N, where the granularity is a PRS resource unit) from the base station 10/LMF 30.

In S302, the terminal 20 measures indicators. Here, it is assumed that M (M>N) indicators are obtained. In S303, the terminal 20 reports N indicators to the base station 10/LMF 30.

According to the Embodiment 0, it is possible to perform reporting with reduced resources of the report indicators, and it is possible to suppress overhead.

### (Embodiment 1)

Next, Embodiment 1 will be described. In the Embodiment, the terminal 20 determines an indicator to be reported based on quality related to the indicator. The Embodiment 1 includes Opt (option). 1 and Opt. 2, and each of them will be described.

### <Embodiment 1: Opt. 1>

In Opt. 1, the terminal 20 measures an existing reception quality parameter for a signal received for measuring the indicator, and compares the measured value with a threshold S(S≥0). The terminal 20 reports, to the base station 10/LMF 30, M (M≥0) indicators measured based on a signal having a measured value greater than the threshold S (S≥0), for example.

The terminal 20 may report M (M≥0) indicators based on a signal having a measured value smaller than the threshold S (S≥0) to the base station 10/LMF 30.

The reception quality parameter may be, for example, NR-TimingQuality described in Non-Patent Document 1, Measurement Quality, CQI, or the like described in 3GPP TS38.455, or may be a parameter other than these.

### <Embodiment 1: Opt. 2>

In Opt. 2, the quality of the indicator is newly defined. The quality of the indicator may be, for example, a value determined on the basis of reception quality of a signal transmitted from the base station 10 for measuring the indicator. In this case, it is assumed that the better (higher) the reception quality is, the higher the quality of the indicator becomes.

The terminal 20 measures the indicator, determines the quality of the indicator, and compares the quality with a threshold S (S≥0). The terminal 20 reports, for example, M (M≥0) indicators whose quality is higher than the threshold S (S≥0) to the base station 10/LMF 30. Further, the terminal 20 may report M (M≥0) indicators whose quality is smaller than the threshold S (S≥0) to the base station 10/LMF 30.

The threshold S of Opt. 1 and the threshold S of Opt. 2 may be different or the same. In each of Opt. 1 and Opt. 2, the threshold S may be provided as notification from the NW (for example, the base station 10/LMF 30) by RRC, MAC-CE, or DCI, or may be defined in technical specifications.

In addition, in Opt. 2, the terminal 20 may report the Quality to the base station 10/LMF 30 together with an indicator having the Quality. Further, the quality may be read as uncertainty.

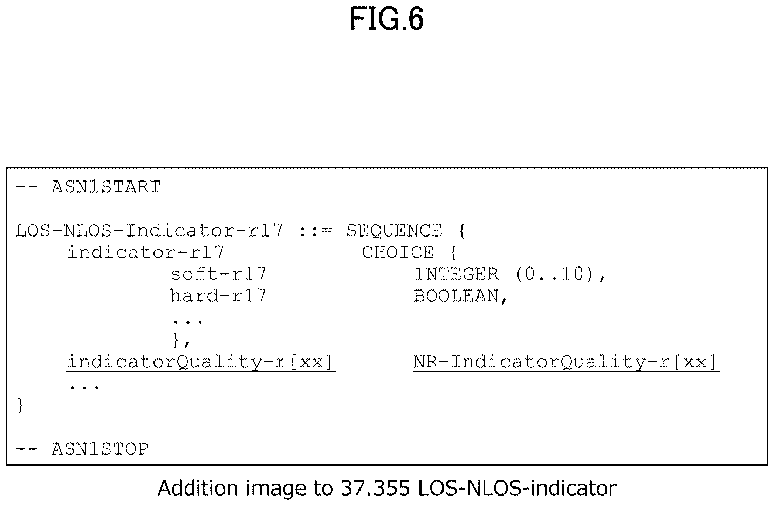

FIG. 6 shows an image in the case where the quality in Opt. 2 is added to Non-Patent Document 1.

According to the Embodiment 1, the terminal 20 can perform reporting in consideration of the reception quality of the indicator.

### (Embodiment 2)

Next, Embodiment 2 will be described. In the Embodiment 2, priorities are assigned among the indicators, and the terminal 20 determines which indicators to report in accordance with those priorities.

For example, the terminal 20 reports to the base station 10/LMF 30 the top-priority N indicators (where 0≤N≤NA+NB+NC+···).

The priorities may be defined in the technical specifications, or may be indicated from the NW (for example, the base station 10/LMF 30) to the terminal 20. The method of indication may be any of RRC, MAC-CE, and DCI. After a plurality of candidates for priorities are configured for the terminal 20 by the base station 10/LMF 30 through RRC, priorities to be actually used may be specified for the terminal 20 through MAC-CE/DCI.

The priority may be defined/specified in units of indicators, may be defined/specified in units of frequencies, may be defined/specified in units of TRPs, or may be defined/specified in units of PRS resources.

The priorities in units of indicators mean that, when indicator 1, indicator 2, and indicator 3 are present, their priorities are defined as "indicator 2>indicator 1>indicator 3", for example.

The priorities in units of frequencies unit mean, for example, that the priorities are defined as "indicator of FR3>indicator of FR2> indicator of FR1".

With regard to the prioritization method, the indicators may be prioritized collectively across all indicators, or they may be prioritized separately within the NA, NB, NC, indicators corresponding to each frequency.

In addition to performing prioritization, the minimum number of indicators to report in each frequency may be defined/specified. For example, it may be defined/specified that at least one indicator is reported at each frequency.

According to the Embodiment 2, for example, it is possible to report only an indicator suitable for positioning assistance information among measured indicators.

### (Embodiment 3)

Next, Embodiment 3 will be described. In the Embodiment 3, a timer that assumes reception of a reference signal necessary for indicator calculation is provided in the terminal 20, and the terminal 20 determines an indicator to be reported according to the timer. The following describes how the timer is started and how operations are performed using the timer. Two alternatives for starting the timer are provided, which are Opt. I and Opt. II.

### <Start of Timer: Opt. I>

In Opt. I, the terminal 20 uses an indicator measurement instruction from the NW (example: the base station 10/LMF 30) as a trigger for starting the timer. That is, the terminal 20 starts the timer at the timing of receiving the measurement instruction of the indicator from the NW.

### <Start of Timer: Opt. II>

In Opt. II, the terminal 20 uses reception of a reference signal (RS) necessary for calculation of a certain reference indicator as a trigger for starting a timer. That is, the terminal 20 starts the timer at a timing when a reference signal (RS) necessary for calculation of a certain reference indicator is received from the NW. The terminal 20 may be instructed in advance by the NW to use the reference indicator as AD (AssistanceData). Note that AD (AssistanceData) is an IE for providing information necessary for position measurement in advance between the UE and the LMF via the LPP.

The operation using the timer includes the following Opt. 1 to 3.

### <Operation Using Timer: Opt. 1>

In Opt. 1, the terminal 20 reports to the base station 10/LMF 30 only indicator values computed (measured) before the timer expires. For an indicator that could not be computed within the timer expiration, the terminal 20 does not report the indicator or reports null.

In a case that the terminal 20 does not report an indicator until the timer expires, or in a case that the terminal 20 reports null after the timer expires, the terminal 20 may assume that "the NW (e.g., the base station 10/LMF 30) recognizes that there is a report that the indicator is not measurable", or may assume that "the NW (e.g., the base station 10/LMF 30) recognizes that the indicator is reported as NLOS".

### <Operation Using Timer: Opt. 2>

In Opt. 2, the terminal 20 reports to the base station 10/LMF 30 the value of any indicator it succeeded in computing before the timer expires, and as for an indicator that could not be computed within the timer period, the terminal 20 uses a predetermined value R (0≤ R≤1) as a complement to report it. That is, for an indicator that could not be computed before timer expiry, the terminal 20 reports the predetermined value R. For example, the terminal 20 may report R=0 (i.e., a value interpreted as NLOS).

The predetermined value R may be specified in the technical specifications, or may be indicated/configured from the NW (e.g., the base stations 10/LMF 30) to the terminal 20.

### <Operation Using Timer: Opt. 3>

In Opt. 3, the terminal 20 returns measurement failure for an indicator that could not be calculated until the timer expires. More specifically, there are Opt. 3.1 and Opt. 3.2 below.

Opt. 3.1: The terminal 20 returns a measurement failure to the NW (e.g., the base station 10/LMF 30) for an indicator that could not be calculated among measurements indicated by the NW (e.g., the base station 10/LMF 30).

Opt. 3.2: When at least one of the measurements indicated by the NW (e.g., the base station 10/LMF30) is not calculated, the terminal 20 returns a measurement failure to the NW (e.g., the base station 10/LMF 30) for each of the indicators of all the indicated measurements. Alternatively, the terminal 20 returns, to the NW (e.g., the base station 10/LMF 30), one measurement failure indicating that all the indicators indicate that the measurements have failed for all the indicated measurements.

### <Embodiment 3: Sequence Example>

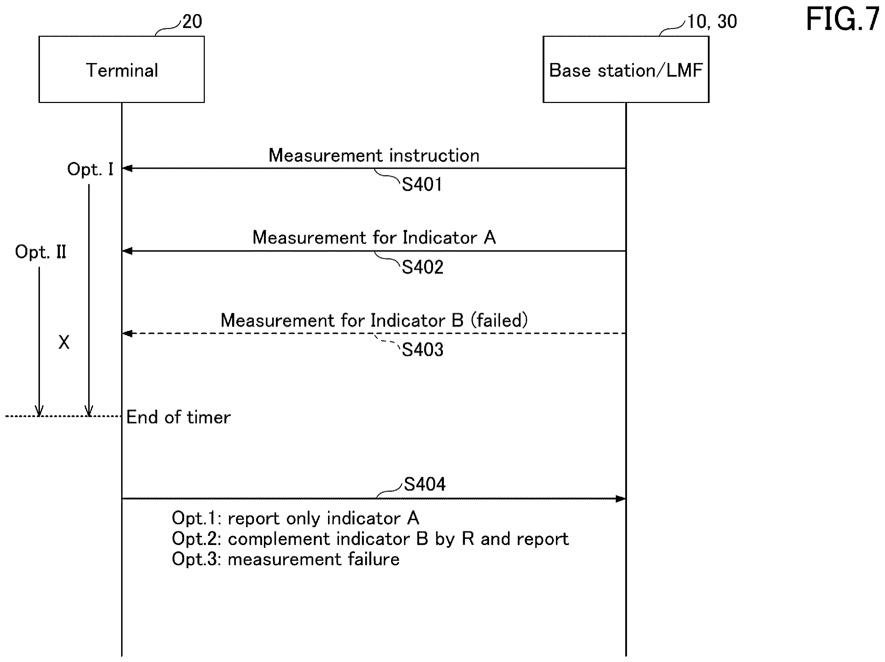

The above-described operation example will be described with reference to FIG. 7. In S401, the terminal 20 receives a measurement instruction from the base station 10/LMF 30. It is assumed that measurement of indicator_A and indicator _B is instructed by the measurement instruction.

In the example of FIG. 7, the terminal 20 succeeds in measuring the indicator _A in S402, but the terminal 20 fails to measure the indicator_B in S403.

In Opt. I, the terminal 20 starts a timer at the timing of receiving the measurement instruction of S401. In Opt. II, the terminal 20 starts a timer at the timing of receiving a reference signal necessary for measuring (calculating) the indicator_A of S402.

When the timer expires without successfully measuring the indicator_B, the terminal 20 performs reporting in one of Opt. 1 to Opt. 3 described above in S404.

According to the Embodiment 3 described above, the terminal 20 can perform reporting by narrowing down to resources of indicators that can be measured within a certain time.

### <Embodiment 4>

Next, Embodiment 4 will be described. In the Embodiment 4, an allowable error between indicators is provided, and the terminal 20 determines an indicator to be reported according to the allowable error.

### <Allowable Error>

The above allowable error (allowable value) may either be signaled to the terminal 20 by the NW (e.g., the base station 10/LMF 30) or defined in the technical specification. If the allowable error is specified in the technical specification, different allowable values may be stipulated according to the relationships among the respective indicators.

For example, different values may be defined for the allowable errors between Bands (for example, between an indicator of band A and an indicator of band B) and the allowable errors between FRs (for example, between an indicator of FR1 and an indicator of FR2).

### <Operation Example 1 Using Allowable Error>

The terminal 20 compares values between indicators and may, for example, report to the base station 10/LMF 30 only indicators having a size, of difference between indicators, equal to or less than (or within) the allowable error Y (>0). For instance, if the allowable error is within 0.2 and the terminal 20 obtains four results, which are indicator _A=0.3, indicator _B=0.2, indicator _C=0.1, and indicator _D=0.6, the terminal 20 reports only indicator _B=0.2 and indicator _C=0.1.

Further, for example, when the allowable error is 0.2 and the terminal 20 obtains two results of indicator _A=0.3 and indicator _B=0.6, the terminal 20 may not report any indicator.

### <Operation Example 2 Using Allowable Error>

Further, the terminal 20 may compare values between indicators, and return a measurement failure when the size of the difference between indicators is equal to or larger than the allowable error Y (>0), for example. More specifically, there are Opt. 3.1 and Opt. 3.2.

### <Opt. 3.1 of Operation Example 2>

The terminal 20 returns a measurement failure to the base station 10/LMF 30 only for an indicator for which the size of the differential is equal to or greater than the allowable error.

For example, in an example of (allowable error=0.3, indicator _A=0.3,indicator_B=0.2, indicator_C=0.1, indicator _D=0.7), the terminal 20 returns a measurement failure to the base station 10/LMF 30 only for the indicator _D.

In addition, when two values of indicator _A=0.3 and indicator_B=0.6 are calculated in the allowable error=0.2, a measurement failure may be returned to the base station 10/LMF 30 for each of indicator_A and indicator _B. This operation may be considered as the operation of Opt. 3.2.

### <Opt. 3.2 of Operation Example 2>

When the terminal 20 detects that the size of difference between any indicators in a plurality of indicators measured at a certain timing is equal to or greater than the allowable error, the terminal 20 returns a measurement failure to the base station 10/LMF 30 for each of all the indicators (the plurality of indicators).

In the above example (allowable error=0.3, indicator_A=0.3,indicator_B=0.2, indicator _C=0.1, indicator _D=0.7), the terminal 20 returns a measurement failure for each of the indicators_A to D to the base station 10/LMF 30.

### <Other Examples of Embodiment 4>

In the Embodiment 4, instead of the above-described allowable error between indicators, an error in reception quality between indicators (reception quality of a reference signal for measuring an indicator) or an error in uncertainty between indicators (quality described in the Embodiment 1) may be used.

According to the Embodiment 4 described above, it becomes possible, for example, to report only indicators that are suitable as positioning-assistance information in measured indicators.

### <Embodiment 5>

Next, Embodiment 4 will be described. In the Embodiment 4, the terminal 20 determines an indicator to be reported by using the conditions of the Embodiments 1 to 4 in a combined manner.

For example, each indicator report condition in any one, any two or more, or all of the Embodiments 1 to 4 is indicated/configured to the terminal 20 from the NW (e.g., the base station 10/LMF 30), and the terminal 20 reports only an indicator that matches the report condition.

For example, when a condition which is "report only indicators with reception quality equal to or higher than a certain threshold" in the Embodiment 1 is configured, the terminal 20 reports only indicators satisfying this condition.

When multiple report conditions are configured for the terminal 20, the terminal 20 may, for example, determine the indicators to be reported by applying logical AND of the report conditions. Alternatively, the terminal 20 may determine the indicators to be reported by applying logical OR of the report conditions.

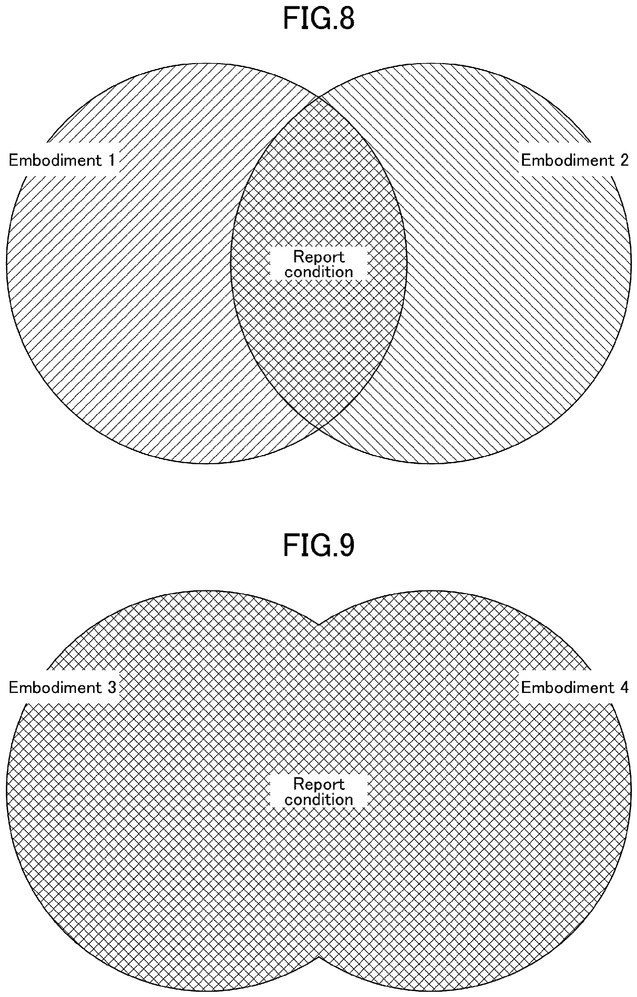

For example, as shown in FIG. 8, as a specific example of the determination by AND of the Embodiment 1 and the Embodiment 2, there is the following operation example. For example, the terminal 20 reports indicators of which the reception quality is equal to or higher than a certain level (Embodiment 1) and of which priority ranks within the top P positions (Embodiment 2).

As shown in FIG. 9, the following operation example is a specific example of determining by OR of the Embodiment 3 and the Embodiment 4. For example, the terminal 20 reports indicators that have been received before the timer expires (Embodiment 3) or that are within the allowable error (Embodiment 4).

According to the Embodiment 5 described above, a composite report condition can be configured, and the terminal 20 can perform various types of reporting based on the report conditions.

### (Other Examples)

Hereinafter, an example applicable to any of the Embodiments 0 to 5 will be described.

In the Embodiments 0 to 5, when information is notified/indicated/configured from the base station 10/LMF 30 to the terminal 20, the method may be RRC, MAC-CE, or DCI.

The "PRS (Positioning Reference Signal)" may be replaced with "DL-PRS", "UL-PRS (e.g. , SRS for positioning, SRS)", or the like.

The "SRS" may be replaced with "SRS for MIMO", "SRS for positioning", or the like. The "CC" may be replaced with "PFL" or the like. The "NW" may be read as "gNB", "TRP", "LMF", or the like. Furthermore, "configured indicated from the NW" may be read as "configured/activated/ indicated from the NW by the RRC/MAC-CE/DCI".

### (Apparatus Configuration)

Next, an example of a functional configuration of the base station 10 and the terminal 20 that execute the processes and operations described above will be described. The base station 10 and the terminal 20 include functions for implementing all the embodiments described above. However, each of the base station 10 and the terminal 20 may instead include only the function of any one of all the embodiments.

### <Base Station 10>

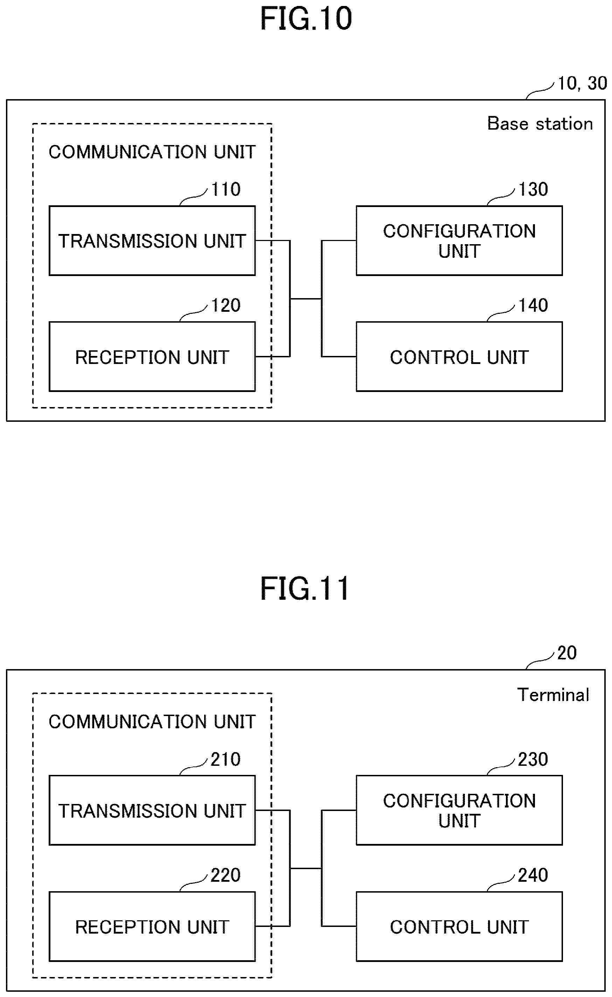

FIG. 10 is a diagram illustrating an example of a functional configuration of the base station 10. As illustrated in FIG. 10, the base station 10 includes a transmission unit 110, a reception unit 120, a configuration unit 130, and a control unit 140. The functional configuration illustrated in FIG. 10 is merely an example. The functional division and the name of the functional unit may be any division and name as long as the operation according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The transmission unit 110 may also transmit signals to a network apparatus, such as the LMF 30. The reception unit 120 includes a function of receiving various signals transmitted from the terminal 20 and acquiring, for example, information of a higher layer from the received signal. The reception unit 120 may receive a signal from a network apparatus such as the LMF 30. The transmission unit 110 has a function of transmitting the NR-PSS, the NR-SSS, the NR-PBCH, the DL/UL control signal, the DCI by the PDCCH, the data by the PDSCH, and the like to the terminal 20.

The configuration unit 130 stores configuration information configured in advance and various types of configuration information to be transmitted to the terminal 20 in a storage device included in the configuration unit 130, and reads the configuration information from the storage device as necessary.

The control unit 140 schedules DL reception or UL transmission of the terminal 20 via the transmission unit 110. The functional unit related to signal transmission in the control unit 140 may be included in the transmission unit 110, and the functional unit related to signal reception in the control unit 140 may be included in the reception unit 120.

The LMF 30 may also have the configuration shown in FIG. 10. In a case where the configuration illustrated in FIG. 10 is the LMF, the transmission unit 110 transmits a signal to another network apparatus (including a base station), and the reception unit 120 receives a signal from another network apparatus (including a base station).

### <Terminal 20>

FIG. 11 is a diagram illustrating an example of a functional configuration of the terminal 20. As illustrated in FIG. 11, the terminal 20 includes a transmission unit 210, a reception unit 220, a configuration unit 230, and a control unit 240. The functional configuration illustrated in FIG. 11 is merely an example. The functional division and the name of the functional unit may be any division and name as long as the operation according to the embodiment of the present invention can be executed. The transmission unit 210 and the reception unit 220 may be collectively referred to as a communication unit.

The transmission unit 210 generates a transmission signal from transmission data and transmits the transmission signal by radio. The reception unit 220 receives various signals by radio and acquires a signal of a higher layer from the received signal of the physical layer. The reception unit 220 has a function of receiving the NR-PSS, the NR-SSS, the NR-PBCH, the DL/UL/SL control signal, the DCI by the PDCCH, the data by the PDSCH, and the like transmitted from the base station 10. In addition, for example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to the other terminals 20 as D2D communication, and the reception unit 220 may receive the PSCCH, the PSSCH, the PSDCH, the PSBCH, or the like from the other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information that is configured in advance.

The control unit 240 controls the terminal 20. The control unit 240 may measure an indicator. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver. The phase measurement may be performed by the reception unit 220 or the control unit 240.

The present specification discloses at least the following Supplementary Notes 1 to 3.

### <Supplementary Note 1>

### [Clause 1]

A terminal including:
a control unit configured to measure a plurality of indicator values each indicating a line-of-sight state; and
a transmission unit configured to select, on the basis of quality related to the indicator values, one or more of the plurality of indicator values measured by the control unit, and to report the selected one or more indicator values to a network.

### [Clause 2]

The terminal as described in Clause 1, wherein the quality is reception quality of a signal received for measuring the indicator values, quality defined for the indicator values, or uncertainty of the indicator values.

### [Clause 3]

A terminal including:
a control unit configured to measure a plurality of indicator values each indicating a line-of-sight state; and
a transmission unit configured to select, on the basis of priority among the indicator values, one or more of the plurality of indicator values measured by the control unit, and to report the selected one or more indicator values to a network.

### [Clause 4]

The terminal as described in Clause 3, wherein the priority is priority in units of indicator values or priority in units of frequencies.

### [Clause 5]

The terminal as described in Clause 3, wherein the transmission unit reports, for each frequency, a number of indicator values that is equal to or greater than a specified or configured minimum number.

### [Clause 6]

A reporting method executed by a terminal, the reporting method including:
a measurement step of measuring a plurality of indicator values each indicating a line-of-sight state; and
a transmission step of selecting, on the basis of quality related to the indicator values, one or more of the plurality of indicator values measured by the measurement step, and reporting the selected one or more indicator values to a network.

According to the configuration described in any of the above clauses, a technique for suppressing the payload size when the indicator value is reported from the terminal to the network is provided. According to clause 2, various qualities can be used as the quality. According to clause 4, various priorities can be applied. According to clause 5, at least the minimum number of indicator values can be reported for each frequency.

### <Supplementary Note 2>

### [Clause 1]

A terminal including:
a control unit configured to start a timer on the basis of a trigger; and
a transmission unit configured to report to a network an indicator value, indicating a line-of-sight state, that is successfully measured before the timer expires.

### [Clause 2]

The terminal as described in Clause 1, wherein, for an indicator value, that cannot be measured before the timer expires, among a plurality of indicator values designated by a measurement instruction, the transmission unit reports a predetermined value to the network.

### [Clause 3]

The terminal as described in Clause 1, wherein, for an indicator value, that cannot be measured before the timer expires, among a plurality of indicator values designated by a measurement instruction, the transmission unit returns a measurement failure to the network.

### [Clause 4]

The terminal as described in any one of Clauses 1 to 3, wherein the trigger is reception of a measurement instruction from the network or reception of a signal required to compute a reference indicator value.

### [Clause 5]

A reporting method executed by a terminal, the reporting method comprising:
a step of starting a timer on the basis of a trigger; and
a step of reporting to a network an indicator value, indicating a line-of-sight state, that is successfully measured before the timer expires.

According to the configuration described in any of the above clauses, a technique for suppressing the payload size when the indicator value is reported from the terminal to the network is provided. According to clause 2, it is possible to report a predetermined value even for an indicator value that could not be measured. According to clause 3, it is possible to report a measurement failure for an indicator value that could not be measured. According to clause 4, it is possible to clarify the trigger for starting the timer.

### <Supplementary Note 3>

### [Clause 1]

A terminal including:
a control unit configured to measure a plurality of indicator values each indicating a line-of-sight state; and
a transmission unit configured, on the basis of a size of a difference among the plurality of indicator values measured by the control unit and an allowable error, to select one or more of the plurality of indicator values and to report the selected one or more indicator values to a network.

### [Clause 2]

The terminal as described in Clause 1, wherein the transmission unit reports to the network an indicator value whose difference size is less than the allowable error.

### [Clause 3]

The terminal as described in Clause 1 or 2, wherein, when the size of the difference is equal to or greater than the allowable error, the transmission unit returns a measurement failure to the network.

### [Clause 4]

The terminal as described in Clause 3, wherein the transmission unit:
returns a measurement failure to the network for an indicator value whose difference size is equal to or greater than the allowable error; or
returns a measurement failure to the network for all of the plurality of indicator values when the size of the difference is equal to or greater than the allowable error.

### [Clause 5]

A reporting method executed by a terminal, the reporting method comprising:
a step of measuring a plurality of indicator values each indicating a line-of-sight state; and
a step of, on the basis of a size of a difference among the plurality of indicator values that are measured and an allowable error, selecting one or more of the plurality of indicator values and reporting the selected one or more indicator values to a network.

According to the configuration described in any of the above clauses, a technique for suppressing the payload size when the indicator value is reported from the terminal to the network is provided. According to clause 2, it is possible to report a plurality of indicator values with small errors. According to clauses 3 and 4, a failure can be reported when the error is large.

### (Hardware Configuration)

The block diagrams (FIGs. 16 and 17) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

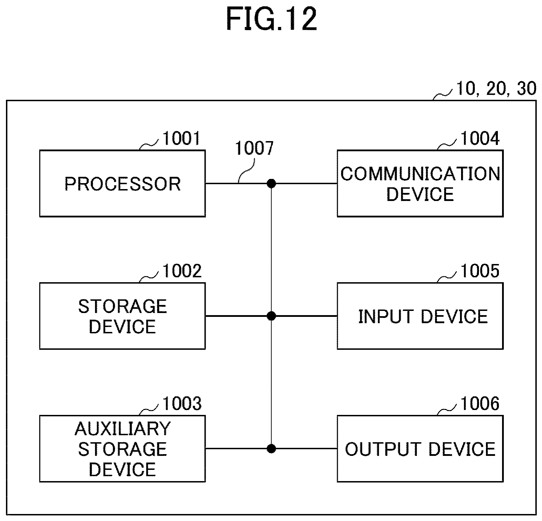

For example, the base station 10, the terminal 20 and the like in one embodiment of this disclosure may function as a computer for performing the processing of a radio communication method of this disclosure. FIG. 12 is a diagram illustrating an example of a hardware configuration of the base station 10 and the terminal 20 and the LMF 30 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 and the LMF 30 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 10 may be attained by a control program that is stored in the storage device 1002 and is operated by the processor 1001. Also, for example, the control unit 240 of the terminal 20 shown in FIG. 11 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 and the LMF 30 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

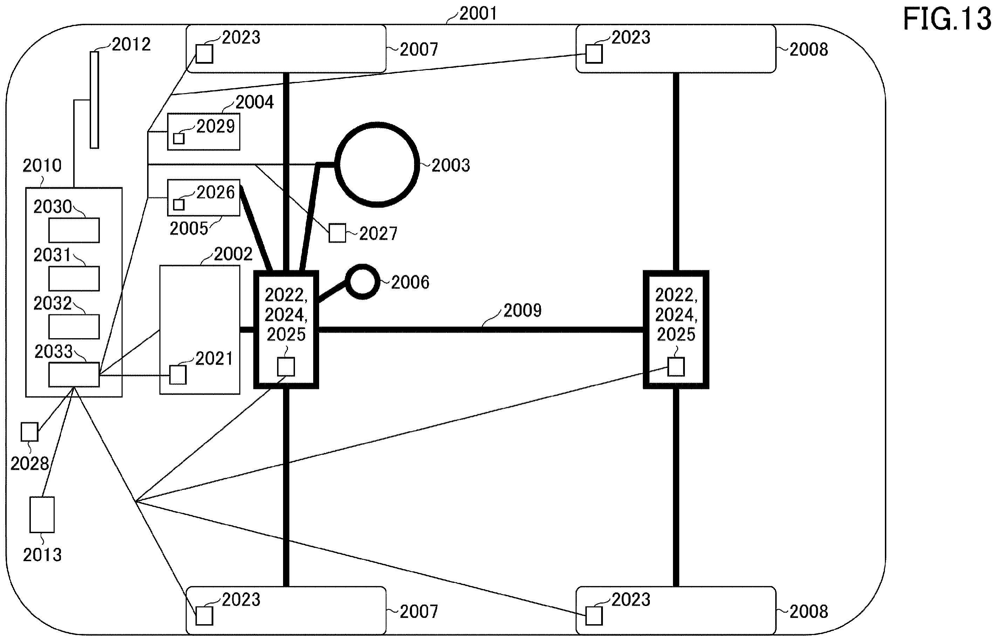

The terminal 20 or the base station 10 or the LMF 30 may be provided in a vehicle. FIG. 13 shows a configuration example of a vehicle 2001 according to the present embodiment. As shown in FIG. 13, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The terminal 20 or the base station 10 in each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of 5G and at least one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multi-copters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A terminal comprising:
a control unit configured to measure a plurality of indicator values each indicating a line-of-sight state; and
a transmission unit configured, on the basis of a size of a difference among the plurality of indicator values measured by the control unit and an allowable error, to select one or more of the plurality of indicator values and to report the selected one or more indicator values to a network.

2. The terminal as claimed in claim 1, wherein the transmission unit reports to the network an indicator value whose difference size is less than the allowable error.

3. The terminal as claimed in claim 1, wherein, when the size of the difference is equal to or greater than the allowable error, the transmission unit returns a measurement failure to the network.

4. The terminal as claimed in claim 3, wherein the transmission unit:
returns a measurement failure to the network for an indicator value whose difference size is equal to or greater than the allowable error; or
returns a measurement failure to the network for all of the plurality of indicator values when the size of the difference is equal to or greater than the allowable error.

5. A reporting method executed by a terminal, the reporting method comprising:
a step of measuring a plurality of indicator values each indicating a line-of-sight state; and
a step of, on the basis of a size of a difference among the plurality of indicator values that are measured and an allowable error, selecting one or more of the plurality of indicator values and reporting the selected one or more indicator values to a network.
